# FASCICULE DE BREVET EUROPEEN

(11) **EP 1 230 176 B1**
(45) Date de publication et mention de la délivrance du brevet: **14.04.2004**
(21) Numéro de dépôt: 00971500.4
(22) Date de dépôt: 25.10.2000
(51) Int. Cl.: C03B 5/43, C03B 5/20

(54) **UTILISATION DE MATERIAUX REFRACTAIRES FRITTES A BASE D'OXYDE D'ETAIN POUR LA REALISATION DE GORGES DE FOURS DE VERRERIE**
GEBRAUCH VON GESINTERTEN FEUERFESTEN MATERIALEN AUF BASIS VON ZINNOXYD ZUR HERSTELLUNG VON DURCHFLÜSSEN VON GLASÖFEN
USE OF SINTERED REFRACTORY MATERIALS BASED ON TIN OXIDE FOR PRODUCING GLASS FURNACE THROATS

(30) Priorité: 27.10.1999 FR 9913447
(43) Date de publication de la demande: 14.08.2002
(73) Titulaire: SOCIETE EUROPEENNE DES PRODUITS REFRACTAIRES, 92400 Courbevoie (FR)
(72) Inventeur: GUIGONIS, Jacques, Marius, Louis, F-84210 Pernes les Fontaines (FR)
(74) Mandataire: Colas, Jean-Pierre
(86) Numéro de dépôt international: PCT/FR2000/002968
(87) Numéro de publication internationale: WO 2001/030710

(56) Documents cités:
- EP-A- 0 939 065
- US-A- 4 388 721
- US-A- 4 426 217

## Description

L'invention concerne l'utilisation de produits réfractaires frittés à base d'oxyde d'étain pour la réalisation des gorges des fours de verrerie et les gorges ainsi réalisées.

L'oxyde d'étain fritté est un matériau utilisé pour les électrodes disposées dans les fours de fusion de certains verres. Le plus souvent, les électrodes chauffantes employées dans les fours électriques de fusion du verre, en particulier du verre sodocalcique, sont des électrodes en molybdène. Ce matériau offre en effet des densités de courant très élevées. Cependant, pour le verre au plomb (cristal), le molybdène ne peut pas être utilisé car il réduit le plomb. On utilise alors des électrodes en oxyde d'étain dont les qualités de conductivité électrique sont reconnues.

Dans la pratique actuelle, les électrodes sont les seules parties des fours industriels de verrerie où l'on peut rencontrer des produits à base d'oxyde d'étain fritté.

Chaque zone des fours de fusion du verre a une fonction particulière et présente donc des contraintes spécifiques.

La gorge est un canal fermé par lequel transite le verre fondu en provenance du bassin de fusion et qui se dirige vers le bassin d'affinage puis les feeders. Pendant ce trajet, la température du verre fondu diminue ; à titre indicatif, elle est de l'ordre de 1350 à 1500°C dans la gorge alors que le verre qui parcourt les feeders a typiquement une température de 1100-1350°C.

La gorge est une zone thermiquement peu isolée qui est très fortement soumise à la corrosion et à l'érosion par le verre fondu. Elle est le siège d'une forte érosion dans la mesure où sa section est limitée alors que l'ensemble du verre fondu, doit s'y écouler. A titre d'exemple, dans un four dont la surface est d'environ 100 m², le verre doit s'écouler à une vitesse correspondant à 400 tonnes par jour dans une section d'environ 0,8 m². Dans ces conditions de corrosion et érosion, la gorge s'use plus rapidement que la plupart des autres zones du four. Souvent, c'est l'usure de la gorge qui détermine la fin de vie d'un four.

Actuellement, on utilise principalement deux types de matériaux pour répondre aux sollicitations auxquelles sont exposées les gorges de fours de verrerie.

Le plus utilisé est un produit électrofondu du type Alumine-Zircone-Silice (AZS en abrégé) contenant environ 41% de zircone. A titre d'exemple, on peut mentionner l'ER-1711 (analyse chimique : Al₂O₃ : 45,5%, ZrO₂ : 41%, SiO₂ : 12%, Na₂O : 1 %, et autres : 0,5% en poids) produit et commercialisé par la Demanderesse. Ce produit est largement utilisé mais sa résistance à l'usure n'est plus suffisante aujourd'hui pour répondre aux évolutions actuelles souhaitées par les verriers qui vont dans le sens d'une plus grande vitesse de tirée et surtout d'un allongement de la durée de vie des fours.

Les produits contenant de l'oxyde de chrome offrent actuellement une alternative aux produits électrofondus AZS.

On rencontre parfois des produits électrofondus du type alumine-chrome-zircone-silice (ACZS). A titre d'exemple, on peut citer le produit ER-2161 (analyse chimique : Al₂O₃ : 31,5%, Cr₂O₃ : 26%, ZrO₂ : 26%, SiO₂ : 13% et autres 3,5% en poids) produit et commercialisé par la Demanderesse. La résistance à la corrosion est meilleure que celle des produits AZS électrofondus mais reste insuffisante en particulier par rapport aux produits frittés contenant plus d'oxyde de chrome.

Pour ce type de produits, on peut citer le C-1221 fabriqué et commercialisé par CORHART REFRACTORIES Co. et constitué, pour l'essentiel, de 94% d'oxyde de chrome et de 4% d'oxyde de titane en poids.

Ce type de produit résiste bien à la corrosion par le verre fondu mais présente le lourd inconvénient de colorer le verre par libération d'oxyde de chrome dans le verre fondu. Ceci est un problème rédhibitoire pour la fabrication des verres blancs et extra-blancs dans lesquels la teneur en oxyde de chrome doit être inférieure à 5 ppm. A titre d'exemple, des mesures ont été faites dans un four à verre sodocalcique équipé d'une gorge en oxyde de chrome. La teneur mesurée en oxyde de chrome dans le verre en sortie de four était de 45 ppm ce qui n'est pas du tout acceptable pour les verres extra-blancs.

Les verres les plus concernés par ce problème de coloration sont les verres sodocalciques extra-blancs pour le flaconnage et la gobeleterie de luxe mais aussi les verres opales au fluor, les verres au plomb (cristal), les verres de borosilicates durs ou de borosilicates neutres blancs.

Il est à noter qu'il ne suffit pas à un matériau d'avoir une excellente résistance à la corrosion par le verre fondu pour convenir à la réalisation de gorges de fours de verrerie. Il faut aussi qu'il présente une conductibilité thermique adaptée aux conditions de faible isolation de la gorge. Ainsi, par exemple, les matériaux à très haute teneur en zircone, quoique présentant une résistance à la corrosion par le verre fondu supérieure aux matériaux AZS, ont une mauvaise conductibilité thermique qui les rend inadaptés à la réalisation de gorges. En effet, la corrosion est moins importante lorsque la température diminue. Pour l'application gorge, on souhaite donc avoir une température d'interface verre/réfractaire la plus faible possible. Ainsi, il faut que le matériau réfractaire utilisé soit un bon conducteur de chaleur pour que le refroidissement extérieur soit efficace.

Il existe donc un besoin pour une gorge de four de verrerie présentant une meilleure résistance à l'usure par le verre fondu.

Selon l'invention il a été trouvé que l'oxyde d'étain fritté présente un excellent comportement en gorge de four de verrerie. En particulier, ce matériau présente un excellent couple résistance à la corrosion/conductibilité thermique.

L'invention concerne donc, selon la revendication 1, l'utilisation de blocs à base d'oxyde d'étain fritté pour la réalisation de la gorge d'un four de verrerie.

Selon l'invention, il est aussi prévu une gorge selon la revendication 2.

Par oxyde d'étain fritté, on entend un matériau constitué d'au moins 95%, de préférence d'au moins 98% en poids, de SnO₂.

Les constituants mineurs restants peuvent être notamment l'un ou plusieurs de l'oxyde de cuivre (CuO), l'oxyde de manganèse (MnO ₂) et l'oxyde d'antimoine (Sb₂O₃). L'oxyde de chrome est à éviter car il provoque une coloration du verre fondu.

La description et l'exemple non limitatif qui vont suivre permettront de mieux comprendre l'invention.

La figure 1 est une vue schématique d'une gorge classique de four de verrerie.

La figure 2 est une vue schématique illustrant une autre gorge classique de four de verrerie.

La figure 3 est une vue schématique illustrant une variante de réalisation conforme à l'invention.

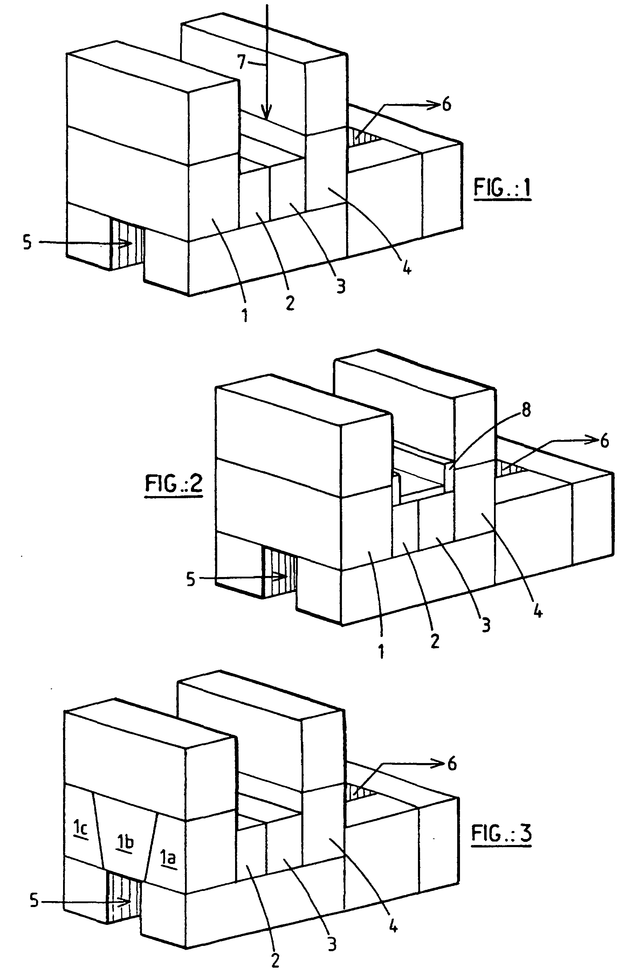

Sur la figure 1 on voit une gorge de four de verrerie classique constituée de blocs monolithiques 1, 2, 3 et 4 de grande taille, actuellement réalisée en matériau AZS électrofondu ou en matériau à base d'oxyde de chrome. Le verre fondu, provenant du bassin de fusion (non représenté), entre dans la gorge en 5 et en ressort en 6. Un système de refroidissement par soufflage d'air, comme indiqué par la flèche 7 est prévu sur les blocs 2 et 3.

Sur la figure 2, on a illustré une variante de la gorge de la figure 1 dans laquelle le soufflage d'air de refroidissement est remplacé par une chemise de refroidissement 8 à circulation d'eau.

Selon l'invention, on substitue des blocs frittés à base d'oxyde d'étain aux blocs en AZS, ACZS ou oxyde de chrome.

Selon une variante de l'invention illustrée par la figure 3, au moins l'un des blocs monolithiques 1 à 4, est remplacé par un assemblage de blocs plus petits à base d'oxyde d'étain fritté. Par exemple le bloc 1 est remplacé par trois blocs 1a, 1b et 1c, comme représenté.

Pour tester le matériau dans les conditions de l'application, nous avons utilisé les tests décrits ci-après.

La corrosion par le verre a été évaluée par un test consistant à faire tourner des échantillons (diamètre 22 mm et longueur 100 mm) immergés dans un bain de verre fondu. Le verre est un verre sodocalcique porté à 1450°C et le test dure 90 heures. A la fin de cette période, on évalue le volume corrodé pour chaque échantillon. Le volume corrodé d'un échantillon de matériau antérieur, en l'espèce le ER-1711, est choisi comme référence. Le rapport de ce volume corrodé à celui de tout autre échantillon multiplié par 100 donne l'indice de corrosion Ic. Ainsi, des valeurs supérieures à 100 sont le signe d'une moindre usure de corrosion que la référence choisie.

Avec ce même test, on peut également évaluer l'indice de corrosion immergé. Pour ce faire, on ne considère le volume corrodé que dans la partie de l'échantillon totalement immergée dans le bain de verre fondu. En fait, on ne prend pas en compte la zone dite du "coup de sabre" qui correspond au point triple matériau réfractaire/verre fondu/air où l'usure est la plus marquée. L'indice de corrosion ainsi obtenu correspond mieux à l'application gorge puisque dans cette zone, tout le matériau est en contact avec le verre fondu, on ne rencontre pas le "coup de sabre" bien connu dans le bassin de fusion.

L'indice de lâcher de pierres correspond à l'aptitude du matériel à se décomposer en morceaux (pierres) entraînés par le verre fondu et qui ne sont pas "digérés" par celui-ci. Ce phénomène est à l'origine de défauts dans le verre qui sont rédhibitoires. L'indice de lâcher de pierres est réalisé en utilisant l'essai dit de T-test décrit par A. Auerbach en Octobre 1972 au Vortrag in Fachausschuss 2 der DGG, Frankfurt. Les tests ont été menés avec un verre sodocalcique et un verre au plomb à une température de 1450°C pendant 90 heures. L'indice de lâcher de pierres varie de 0 à 5. Les meilleurs matériaux ont un indice de 0-1.

L'indice de bullage correspond à l'aptitude du matériaux à former des bulles au contact du verre fondu. Comme le lâcher de pierres, ce phénomène entraîne des défauts rédhibitoires et doit donc être évité. L'indice de bullage est déterminé selon la méthode décrite par A. Auerbach dans les Comptes Rendus du Symposium sur l'Elaboration du verre, Madrid, 11-14 Septembre 1973, pages 259-312. Le test est réalisé avec un verre sodocalcique porté à 1100°C et dure 1 heure. L'indice de bullage varie entre 0 et 10. Des valeurs de 0-1 correspondent à un bullage très faible et sont très satisfaisantes.

Comme matériau à base d'oxyde d'étain, on a utilisé le produit T-1186 de la Société CORHART REFRACTORIES Co. Son analyse chimique moyenne indique un taux d'oxyde d'étain de 98,5% avec 1% de Sb₂O₃ et environ 0,3% de CuO. L'oxyde d'antimoine et de cuivre sont les seuls ajouts volontaires et sont d'ailleurs bien connus pour les produits à base d'oxyde d'étain. L'oxyde de cuivre peut être partiellement ou totalement remplacé par de l'oxyde de manganèse. Les autres espèces présentes sont des impuretés amenées par les matières premières. Des oxydes tels que l'oxyde de chrome doivent être particulièrement évités à cause du problème de coloration évoqué plus haut.

Nous avons comparé le T-1186 aux produits ER-1711 et C-1221.

Les résultats des tests ainsi que quelques caractéristiques des matériaux sont donnés dans le tableau 1.

**TABLEAU 1**

| | ER-1711 | C-1221 | T-1186 |
|---|---|---|---|
| Ic | 100 | 186 | 155 |
| Ic immergé | 100 | 233 | 158 |
| Indice de lâcher de pierres -verre sodocalcique- | 0-1 | 0-1 | 0-1 |
| Indice de bullage | 0-1 | 0-1 | 0-1 |
| Conductibilité thermique à 1000°C | 4 W/m*K | 2,7 W/m*K | 10 W/m*K |
| Dilatation à 1000°C | 0,75% | 0,71% | 0,56% |

On constate que le matériau à base d'oxyde d'étain offre une résistance à la corrosion 1,5 fois supérieure à celle des matériaux électrofondus AZS. Le matériau d'oxyde d'étain reste moins résistant à la corrosion que le matériau au chrome mais ne présente pas l'inconvénient rédhibitoire de la coloration du verre.

Par ailleurs, il est important de constater que les indices de lâcher de pierres et de bullage restent aussi bons que les matériaux utilisés actuellement.

D'autre part, on a vu précédemment, à propos des matériaux à très haute teneur en zircone, que les contraintes d'isolation de la gorge font que de bons indices de corrosion ne sont pas toujours le gage d'un bon comportement à l'application en gorge. Il convient donc de nuancer les résultats des indices de corrosion en fonction de la conductibilité thermique des matériaux.

La conductibilité thermique de l'oxyde d'étain est particulièrement élevée. Elle est 2,5 fois supérieure à celle de l'AZS électrofondu et 3,7 fois supérieure à celle du matériau au chrome. Ceci signifie que le refroidissement extérieur du matériau sera beaucoup plus efficace et que, pour une même épaisseur de matériau réfractaire, la température d'interface verre/réfractaire sera abaissée ce qui diminue d'autant la corrosion par le verre fondu. Cette propriété peut être valorisée car la grande majorité des gorges utilisent un refroidissement soit par water-jacket placé directement sur le ciel de gorge, soit un refroidissement par soufflage d'air.

Ainsi, la combinaison indice de corrosion/conductibilité thermique permet d'envisager un excellent comportement des blocs d'oxyde d'étain dans la gorge.

Le coût élevé des produits à base d'oxyde d'étain par rapport aux produits utilisés actuellement ainsi que d'éventuels problèmes de faisabilité de grosses pièces peuvent amener à modifier légèrement la conception de la gorge.

Ainsi, pour réduire le coût, on peut imaginer un montage composite oxyde d'étain fritté/AZS étectrofondu. La partie la plus exposée à la corrosion et l'érosion du verre fondu (bloc 1 de la figure 1) serait en oxyde d'étain alors que le reste de la gorge serait en AZS électrofondu. Ce type de montage composite peut être envisagé dans la mesure où les coefficients de dilatation des matériaux employés sont proches.

Par ailleurs, pour éviter de multiplier le nombre de joints et, donc, les lieux de corrosion privilégiés, on pourrait avoir recours à des blocs frittés composites comportant chacun une zone en AZS et une ou plusieurs zones en oxyde d'étain.

Egalement, pour assurer une bonne faisabilité industrielle des pièces, on peut envisager de remplacer les gros blocs par un assemblage de plusieurs blocs plus petits comme schématisé sur la figure 3.

## Revendications

1. Utilisation de blocs (1, 2, 3, 4) à base d'oxyde d'étain fritté pour la réalisation de la gorge d'un four de verrerie.

2. Gorge de four de verrerie **caractérisée en ce que** la partie la plus exposée à la corrosion et l'érosion de verre fondu est à base d'oxyde d'étain fritté, le reste de ladite gorge étant en matériau réfractaire AZS électrofondu.

3. Gorge selon la revendication 2, **caractérisée en ce qu'**elle comporte au moins un bloc composite comportant une zone en AZS et une ou plusieurs zones en oxyde d'étain fritté.

## Patentansprüche

1. Verwendung von Blöcken (1, 2, 3, 4) auf der Grundlage von gesintertem Zinnoxid zur Herstellung des Durchlasses eines Glasschmelzofens.

2. Durchlass eines Glasschmelzofens, **dadurch gekennzeichnet, dass** der der Korrosion und der Erosion durch geschmolzenes Glas am stärksten ausgesetzte Teil auf gesintertem Zinnoxid beruht, wobei der Rest des Durchlasses aus hitzebeständigem AZS elektrogeschmoizenem Material besteht.

3. Durchlass nach Anspruch 2, **dadurch gekennzeichnet, dass** er mindestens einen Verbundmaterialblock umfasst, der eine Zone aus AZS und eine oder mehrere Zonen aus gesintertem Zinnoxid umfasst.

## Claims

1. Use of blocks (1, 2, 3, 4) based on sintered tin oxide for producing the throat of a glass furnace.

2. A glass furnace throat **characterized in that** the portion most exposed to corrosion and erosion by the molten glass is based on sintered tin oxide, the remainder of said throat being of electroslag AZS refractory.

3. A throat according to claim 2, **characterized in that** it includes at least one composite block including an AZS zone and one or more sintered tin oxide zones.
